# EUROPEAN PATENT SPECIFICATION

(11) **EP 0 569 257 B1**
(45) Date of publication and mention of the grant of the patent: **26.06.2002**
(21) Application number: 93303566.9
(22) Date of filing: 07.05.1993
(51) Int. Cl.: C09K 11/85, G06K 19/10, G02F 2/02

(54) **Infrared-to-visible up-conversion material, and infrared light identification elements comprising same**
Infrarot/sichtbar-aufwärts-Umwandlungsmaterial und Infrarotlicht-Erkennungselementen diese enthaltende
Matériau de conversion de l'infrarouge en lumière visible et éléments d'identification de la lumière infrarouge le contenant

(30) Priority: 08.05.1992 JP 11563892; 09.07.1992 JP 18218692; 09.07.1992 JP 18218892
(43) Date of publication of application: 10.11.1993
(73) Proprietor: NIPPON TELEGRAPH AND TELEPHONE CORPORATION, Tokyo (JP); SUMITA OPTICAL GLASS, INC., Chiyoda-ku Tokyo (JP)
(72) Inventor: Ohwaki, Junichi, Mito-shi, Ibaraki-ken 310 (JP); Wang, Yuhu, Chiyoda-ku, Tokyo (JP); Shibukawa, Atsushi, Higashi-Ibaraki-gun, Ibaraki-ken 311-31 (JP); Sawanobori, Naruhito, c/o Sumita Optical Glass Inc, Chiyoda-ku, Tokyo (JP); Nagahama, Shinobu, c/o Sumita Optical Glass, Inc., Chiyoda-ku, Tokyo (JP)
(74) Representative: Baverstock, Michael George Douglas

(56) References cited:
- EP-A- 0 029 963
- EP-A- 0 345 903
- EP-A- 0 523 828
- DE-A- 2 018 352
- FR-A- 2 430 969
- US-A- 3 623 907

## Description

This invention relates to an infrared-to-visible up-conversion material capable of emitting a reradiated light (fluorescence) containing spectral components in the visible range by irradiating infrared light, and in particular, it is concerned with an infrared-to-visible up-conversion material which can be applied to an infrared light identification element having a useful conversion efficiency and sensitivity for infrared light in wavelengths of the 1.5 µm band, 0.98 µm band and 0.8 µm band, without necessity of pre-excitation.

Recently demand for elements for detecting infrared light have been increasing. Applications include detection of the beam position of emitting elements such as lasers, LD and LED, and pattern identification of mode shapes, and searching for a broken point in an optical fiber cable. Systems available for these applications can be classified roughly into pure electric systems, e.g. optical power meters using semiconductor photodiodes, and visually detectable systems using e.g. vidicons, image intensifiers, and IR excitable phospors.

However, the pure electric systems have high sensitivity, but have the disadvantage that visual detection is impossible. On the other hand, the vidicon or image intensifier has the disadvantage that sensitivity is insufficient and production cost is higher. Accordingly, a system using an infrared-to-visible up-conversion material such as an infrared-excitable phosphor, having visual detectability, relatively high conversion efficiency and sensitivity and lower expense, has been considered promising.

A phosphor is usually excited by a suitable excitation source. In the emitted light from the excited phosphor, various spectroscopic distributions can be provided depending upon the variety of the phosphor. Therefore, the phosphor can be applied to various application fields by combining it with a suitable excitation source. In particular, a material called an "infrared excitable phosphor" is known as a wavelength up-conversion phosphor from infrared to visible light. For the anti-Stokes-wise wavelength conversion of from such infrared light to visible light having a markedly large photon energy, it is necessary to choose carefully the relationship between the property and excitation wavelength of a material.

As an infrared-to-visible wavelength up-conversion material of the prior art, IR Sensor Card (commercial name, made by QUANTEX Co.) has been well known. This IR Sensor Card emits red light or blue-green light under infrared irradiation depending on the material of the phosphor. For this sensor, a previous excitation is required before irradiation of infrared light (although possibly by room light) and infrared light-excitation is first possible through this previous excitation process. When infrared light is continuously irradiated on this infrared light detecting element, however, there arises a problem that the conversion efficiency varies with passage of time, although reversible, and the emission intensity of the visible light is gradually reduced.

On the other hand, infrared-to-visible wavelength up-conversion materials which do not need previous excitation have been reported, typical of which are YF₃: Er, Yb; Y₃0Cl₇: Er, Tb (H. Kuroda et al. J. Phys. Soc. Jpn., Vol. 33, No. 1, 1972, pp 125-141), NaLnF₄: Er, Yb (Ln: Y, Gd, La) (T. Kano et al. J. Electrochem. Soc., Vol. 119, No. 11, 1972, pp. 1561-1564), BaY₂F₈: Er, Yb (Y. Mita et al. Appl. Phys. Lett., Vol. 23, No. 4, 1973, pp. 173-175), (PbF₂-GeO₂): Er, Yb, (PbF₂-GeO₂) : Tm, Yb (F. Auzel et al., J. Electrochem. Soc., Vol. 122, No. 1, 1975, pp. 101-107). These materials utilize the multiphoton excitation of rare earth ions (mainly Er³⁺ ions).

However, the above described materials utilizing multiphoton excitation of rare earth ions each have a low conversion efficiency of infrared light and low sensitivity. As described above, the prior art has the disadvantages that a previous excitation is required before irradiation of infrared light and when infrared light is continuously irradiated, the emitting intensity of visible light is gradually reduced. Even if a previous excitation is not required, the conversion efficiency and sensitivity are low.

EP-A-O 523 828 describes a crystalline up-conversion phosphor material comprising a rare earth halide, such as LaBr₃, doped with Erbium ions.

DE-A-2 018 352 relates to an infrared-to-visible up-conversion barium halide in which a barium chloride phosphor is described activated by erbium having an emission at a wavelength of 660 nm.

US-A-3 623 907 describes an infrared excitable phosphor of strontium chloride activated by erbium ions.

The present invention provides an infrared-to-visible wavelength up-conversion material whereby the problems of the prior art are solved and which is capable of emitting a reradiated light containing spectral components in the visible range, by irradiating infrared light.

The present invention also provides an infrared-to-visible up-conversion material which can be applied to an infrared light detecting element having a useful conversion efficiency and sensitivity for infrared light in wavelengths of the 1.5 µm band, 0.98 µm band and 0.8 µm band without necessity for previous excitation.

The above can be attained by an infrared-to-visible wavelength up-conversion material consisting of an inorganic material comprising at least two elements of erbium (Er) and halogens or compounds thereof.

The accompanying drawings are to illustrate the principle and merits of the present invention in detail.

Fig. 1 is an example of an emission spectrum when Example 1 of the infrared-to-visible up-conversion material of the present invention is excited by an infrared light of wavelength 1.5 µm.

Fig. 2 is an example of an emission spectrum when a commercially available infrared-to-visible up-conversion material of the prior art is irradiated by an infrared light of wavelength 1.5 µm band.

Fig. 3 is a 4f electron energy level of Er (3+) ion showing a 545 nm emission process when an infrared-to-visible up-conversion material giving the above described emission spectrum of Example 1 is excited by an infrared light of wavelength of the 1.5 µm band.

Fig. 4 is an emission spectrum of Example 2 of the infrared-to-visible up-conversion material according to the present invention.

Fig. 5 is an emission spectrum of Example 3 of the infrared-to-visible up-conversion material according to the present invention.

Fig. 6 is a graph showing the relationship between the peak intensity at 540-550 nm and Er concentration when the infrared-to-visible up-conversion material of the present invention is excited by an infrared light of wavelength 1.5 µm.

Fig. 7 is an example of an excited spectrum in the wavelength of 1.5 µm band of the infrared-to-visible up-conversion material of the present invention.

Fig. 8 is an example of an emission spectrum obtained when the infrared-to-visible up-conversion material of the present invention is excited by an infrared light of wavelength 0.8 µm.

Fig. 9 is an example of an emission spectrum obtained when an infrared-to-visible up-conversion material used in a commercially available IR sensor card (IR Catcher-Mark 2 - commercial name- made by Tokin Corp.) is irradiated by an infrared light of wavelength in the 0.8 µm band.

Fig. 10 is a graph showing the relationship between the peak intensity at 540-550 nm and Er concentration when the infrared-to-visible up-conversion material of the present invention is excited by an infrared light of wavelength 0.8 µm.

The inventors have made various attempts to develop an infrared-to-visible wavelength up-conversion material to be applied to an infrared light detecting element having a useful conversion efficiency and sensitivity for infrared light. They have now found an infrared-to-visible wavelength up-conversion material consisting of an inorganic material comprising at least two elements of erbium (Er) and halogens or compounds thereof.

The emission property of rare earth ions in a solid are strongly dependent on the concentration of the rare earth ions themselves and on the matrix surrounding the rare earth ions. As matrix materials utilizing the multiphoton excitation of rare earth ions, have been used fluorides, oxyfluorides and oxychlorides. According to the present invention, an infrared-to-visible up-conversion material having a higher conversion efficiency than the materials of the prior art is obtained by the discovery of a new matrix containing no oxygen, as described above, and having a capacity for uniformly accommodating rare earth ions (Er³⁺) in large amount.

The infrared-to-visible up-conversion material of the present invention can be prepared by mixing the ingredients of the following materials in a predetermined proportion and then calcining the mixture.

Specifically, the infrared-to-visible wavelength up-conversion material of the present invention comprises an inorganic material comprising:

| | |
|---|---|
| ErCl₃ | 0.5 to 40 mol % |
| Alkaline Earth Chloride (e.g. BaCl₂) | 5 to 80 mol % |
| PbCl₂ | 0 to 60 mol % (preferably 2 to 60 mol %) |
| CdCl₂ | 0 to 70 mol % (preferably 2 to 70 mol %) |
| AgCl | 0 to 40 mol % (preferably 2 to 40 mol %) |
| CuCl or | 0 to 50 mol % (preferably 2 to 50 mol %) |
| ErBr₃ | 0.5 to 50 mol % |
| Alkaline Earth Bromide (e.g. BaBr₂) | 5 to 80 mol % |
| PbBr₂ | 0 to 60 mol % (preferably 5 to 60 mol %) |
| CdBr₂ | 0 to 50 mol % (preferably 5 to 50 mol %) |
| AgBr | 0 to 50 mol % (preferably 50 to 50 mol %) |
| CuBr | 0 to 60 mol % (preferably 5 to 60 mol %) |

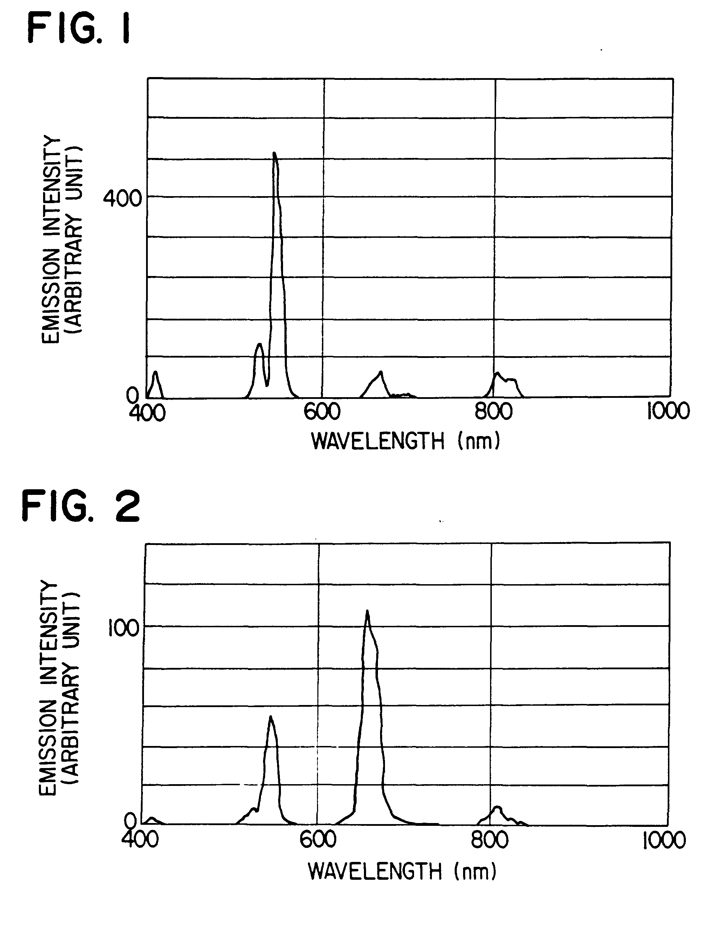

In Fig. 1 is shown an example of an emission spectrum when the infrared-to-visible up-conversion material of the present invention is excited by an infrared light of wavelength 1.5 µm. The emission peak wavelengths in Fig. 1 are 405-415 nm, 520-550 nm, 650-670 nm and 790-830 nm. Above all, the emission intensity of 520-550 nm is the strongest and this is perceived as green light by the naked eye. Fig. 2 is an example of an emission spectrum obtained when an infrared-to-visible up-conversion material (Er(3+)-containing fluoride) used in a commercially available article (IR Catcher-Mark 2-commercial name-made by Tokin Corp.) is irradiated by an infrared light of wavelength in the 1.5 µm band. In comparison of the emission spectra of Fig. 1 and Fig. 2, the emission spectrum in Fig. 1 shows that the emission intensities of 520-550 nm and 405-415 nm are increased and the emission intensity of 650-670 nm is decreased. Of these emission peaks, the intensity (spectral luminous efficacy) such that the human eye records brightness is, for 100 at wavelength of 555 nm, about 97.5 at 520-550 nm and about 6.5 at 650-670 nm. This shows that the human eye has, at 520-550 nm, a sensitivity 15 times higher than at 650-670 nm and briefly teaches that when the emission peak intensity of 520-550 nm is doubled, a similar brightness can be felt even if the emission intensity at 650-670 nm is lowered to 1/30. Therefore, the increase in the emission peak intensity at 520-550 nm more than makes up for the decrease of the emission peak intensity at 650-670 nm. It will clearly be understood from the above described results that the infrared-to-visible up-conversion material of the present invention is capable of markedly increasing the conversion efficiency in the 1.5 µm band to visible range wavelength up-conversion, as compared with the materials of the prior art.

The present invention will now be illustrated in detail with reference to the accompanying drawings and following examples:

It will be obvious to those skilled in the art that various changes and modifications can be made in the components, ratios and operational order without departing from the scope of the present invention. Therefore, the present invention should not be construed as being limited to the following examples.

### Example 1

An embodiment of the infrared-to-visible up-conversion material giving an emission spectrum as shown in Fig. 1 was prepared by the following procedure. Commercially available powdered reagents, ErCl₃, YCl₃, BaCl₂ and PbCl₂ (all powders being of at least 3N) were weighed in a predetermined proportion (e.g. ErCl₃:YCl₃:BaCl₂:PbCl₂ = 20:15:35:30 mol %), pulverized in a mortar and simultaneously ground and mixed. The resulting mixed powder was charged into a crucible of glassy carbon and put in an electric furnace maintained at 650°C, the temperature of the electric furnace being increased. The mixture was maintained at a calcination temperature of 950°C for 1 hour and adequately reacted, the temperature being gradually reduced at a rate of 5°C/min. When the furnace temperature had lowered to about 650°C, the reacted mixture was taken as a sample. During the calcination, mixed gases of CCl₄ + N₂ (or Cl₂) were passed into the furnace and contamination of oxygen or moisture was prevented to maintain an atmosphere for chlorination of oxides contained in the raw material. In order to prevent the raw material from oxidation due to contact with oxygen or moisture, all the procedures of weighing of the reagents, preparation, melting and sintering were carried out in an N₂ or Ar gas atmosphere. As the material of the crucible, there could be used quartz, platinum or gold instead of glassy carbon.

When raw materials of pure chlorides were not used, for example, oxide raw materials of Er₂O₃, Y₂O₃, BaCO₃, etc. were mixed, charged into a crucible of glassy carbon or platinum, heated in an atmospheric furnace at a high temperature while passing a strongly reactive gas such as HCl or Cl₂ therethrough and effecting the chlorination thereof, thus obtaining a similar infrared-to-visible up-conversion material.

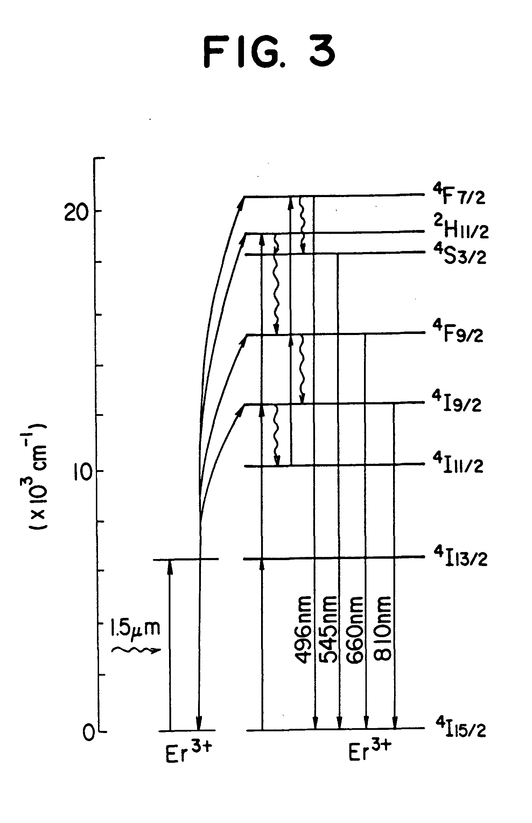

The thus prepared infrared-to-visible up-conversion material was excited by an LD light of 1.5 µm (power of 5 mW) to obtain an emission spectrum shown in Fig. 1. On the other hand, an infrared-to-visible up-conversion material (Er(3+) containing fluoride) used in a commercially available article (IR Catcher-Mark 2 -commercial name- made by Tokin Corp.) was similarly irradiated by an infrared light of wavelength in the 1.5 µm band to obtain an emission spectrum shown in Fig. 2. Fig. 3 shows a 4f electron energy level of the Er (3+) ion. In the emission spectra shown in Fig. 1 and Fig. 2, each of the peaks at 410 nm, 522 nm, 545 nm, 660 nm and 800 nm is an emission by the radiative transition of from the excited level of the 4f electron of Er (3+) ion to the ground level, i.e. ²H_{9/2} → ⁴I_{15/2}, ²H_{11/2} → ⁴I_{15/2}, ⁴S_{3/2} → ⁴I_{15/2}, ⁴F_{9/2} → ⁴I_{15/2} and ⁴F_{9/2} → ₄I_{15/2}. The peak intensity of 520-550 nm in the emission spectrum in Fig. 1 is greater by about 9 times than the same peak intensity of Fig. 2.

An example of the mechanism which is considered as, for example, 15 µm to 545 µm up-conversion process will be shown in the following. As shown in Fig. 3, there is caused a transition from the ground level (⁴I_{15/2}) of the 4f electron of the Er (3+) ion to the excited level (⁴I_{13/2}) and the transition from the above described excited level to the above described ground level (⁴I_{13/2} → ⁴I_{15/2}) by irradiation with infrared light of 1.5 µm. Simultaneously, the transition energy is transferred to another Er (3+) ion by non-radiation to cause two-stagewise excitation from the excited level (⁴I_{13/2}) to the further upper excited level (⁴I_{9/2}). By similar energy transfer, three-stagewise excitation is caused from the excited level (⁴I_{9/2}) of the Er (3+) ion to the further upper excited level (²H_{11/2}). Thus, an emission of 545 nm is obtained by relaxation from the above described excited level (²H_{11/2}) to the level just below (⁴S_{3/2}) through non-radiation and transition from this level to the ground level (⁴S_{3/2} → ⁴I_{15/2}).

Since the chloride material of the present invention has a smaller phonon energy of the matrix than the oxide or fluoride materials of the prior art, the non-radiative transition from the excited level to the level just below hardly takes place and the life time is lengthened at the excited level, whereby the green emission at 545 nm is rendered stronger as compared with the prior art materials. From this point of view, not only oxide materials but also fluoride materials cannot be said to be preferable.

In this example, the material was prepared by a solid or liquid phase reaction, but when it was prepared by a gaseous phase reaction such as vacuum vapor deposition, sputtering vapor deposition or chemical vator deposition (CVD), similar effects were obtained.

### Example 2

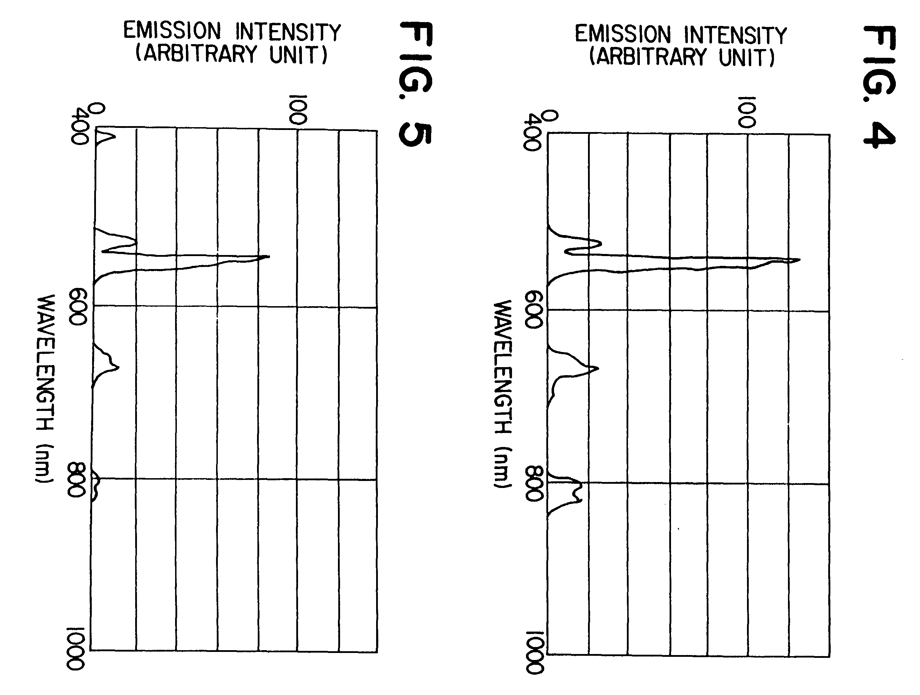

An infrared-to-visible up-conversion material was prepared in an analogous manner to Example 1 except using a material composition ErCl₃ : YCl₃ : BaCl₂: NaCl = 20 : 15 : 30 : 35 mol % and excitation by an LD light of 1.5 µm (power of 5 mW) to obtain an emission spectrum shown in Fig. 4. In this example, similar advantages to Example 1 were also obtained and the peak intensity of 520-550 nm in the emission spectrum in Fig. 4 was about twice or more greater than the same peak intensity of the prior art article of Fig. 2.

### Example 3

An infrared-to-visible up-conversion material was prepared in an analogous manner to Example 1 except using a material composition ErCl₃ : YCl₃ : BaCl₂ = 30 : 40 : 30 mcl % and excitation by an LD light of 1.5 µm (power of 5 mW) to obtain an emission spectrum shown in Fig. 5. In this example, similar advantages to Example 1 were also obtained and the peak intensity of 520-550 nm in the emission spectrum in Fig. 5 was about 1.5 times or more greater than the same peak intensity of the prior art article of Fig. 2.

### Example 4

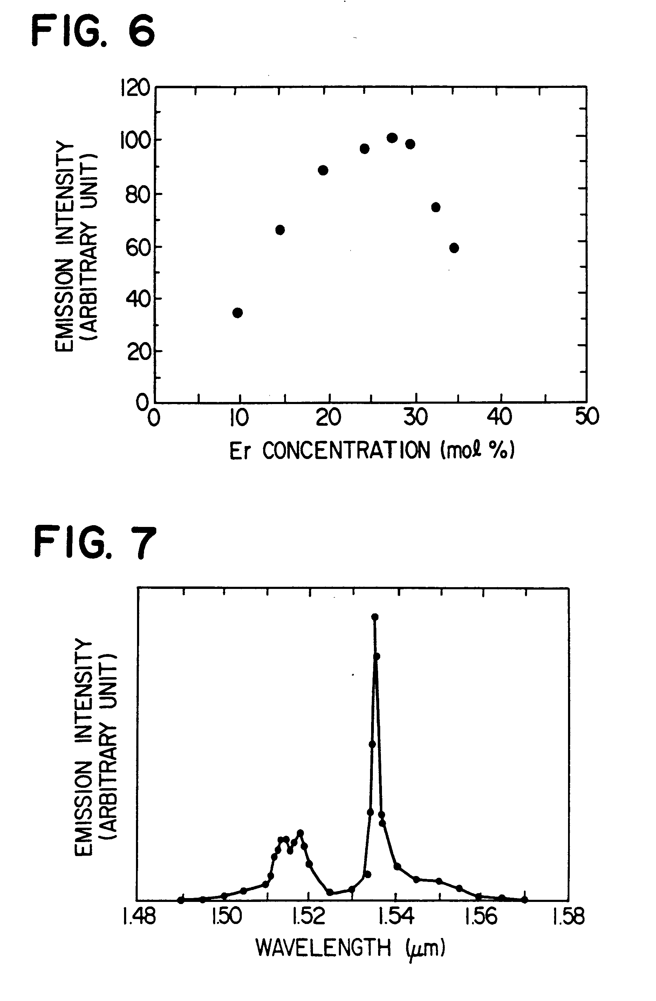

An infrared-to-visible up-conversion material was prepared in an analogous manner to Example 1 except using a material composition ErCl₃ : BaCl₂ = x : (100 - x) mol % and excitation by an LD light of 1.5 µm (power of mW) to obtain an emission spectrum, in which the relationship between the peak intensity at 540-550 nm and x is shown in Fig. 6. The peak intensity reaches substantially the maximum value at x = 20 - 30 and the peak intensity at x = 28 is at least 40 times greater than that of Fig. 2.

The excitation spectrum (emission wavelength: 540-550 nm) of the material of this Example, measured by the use of a wavelength variable LD, is shown in Fig. 7. The excitation peak is at 1.5355 µm and this wavelength is substantially in agreement with the maximum gain wavelength (1.536 µm) of EDFA (Er dope fiber amp).

### Example 5

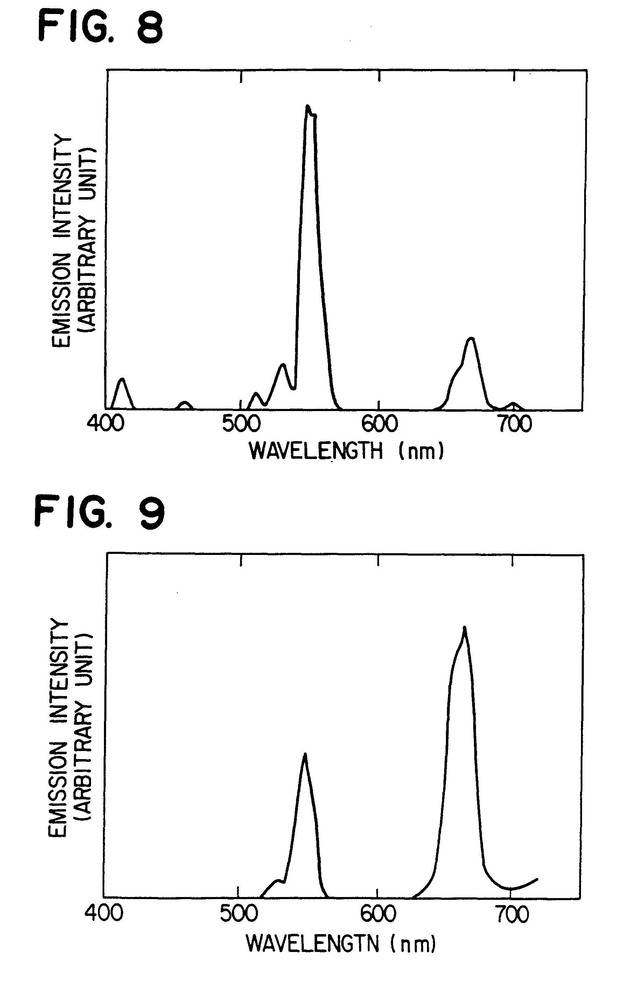

An infrared-to-visible up-conversion material was prepared in an analogous manner to Example 1 except using a material composition ErCl₃ : BaCl₂ = 25 : 75 mol % and excitation by an LD light of 0.8 µm (power of 75 mW) to obtain an emission spectrum shown in Fig. 8. The emission spectrum of a commercially available article by the same measurement method is shown in Fig. 9. The ordinate of Fig. 9 is enlarged by 100 times as compared with that of Fig. 8. The peak intensity of 540-550 nm in Fig. 8 is about 180 times or more times greater than the same peak intensity of Fig. 9.

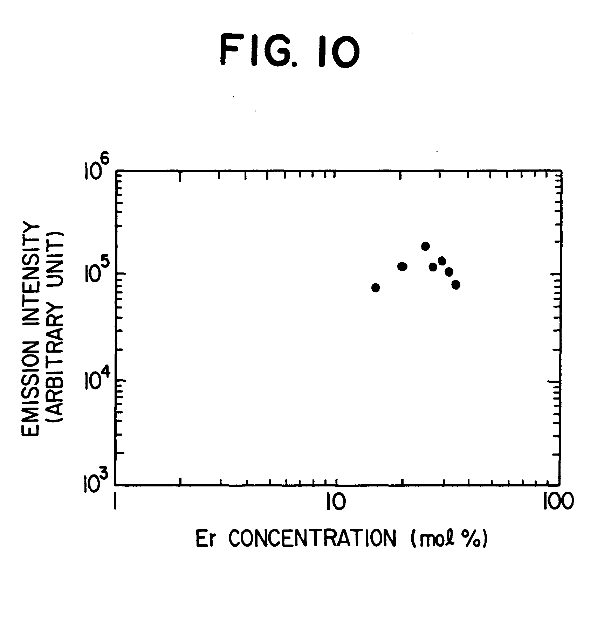

An infrared-to-visible up-conversion material was prepared using a material composition ErCl₃ : BaCl₂ = x : (100 - x) mol % and was excited by an LD light of 0.8 µm (power of 75 mW) to obtain an emission spectrum, in which the relationship between the peak intensity at 540-550 nm and x is shown in Fig. 10. At x = 20-30, the peak intensity is substantially maximum.

In the chloride type material of the present invention, a strong emission peak was similarly observed at 496 nm by the excitation of 0.98 µm even if other compositions were used. As is evident from the foregoing illustrations and examples, the infrared-to-visible up-conversion material consisting of an inorganic material comprising at least two elements of erbium (Er) and halogens or compounds thereof according to the present invention is capable of exhibiting a better conversion efficiency than prior art articles and a reradiated light containing spectral components in the visible range by irradiation or infrared light of the 1.5 µm band, and accordingly, it can be applied to an infrared light identification element having a useful conversion efficiency and sensitivity for infrared light in the wavelengths of the 1.5 µm band, 0.98 µm band and 0.8 µm band without necessity for previous excitation.

Furthermore, the infrared-to-visible up-conversion material of the present invention has an advantage that the wavelength conversion efficiency from an irradiated light to visible light and the visible light emission intensity can be stabilized for a long time.

## Claims

1. An infrared-to-visible up-conversion material capable of emitting luminescence in a range of 520-550 nm and 650-670 nm during irradiation, consisting of an inorganic material consisting essentially of:
| | | |
|---|---|---|
| (a) | Erbium chloride | 0.5 to 40 mol % |
| | or Erbium bromide | 0.5 to 50 mol % |
| (b) | Alkaline earth halide selected from alkaline earth chlorides and bromides | 5 to 80 mol % |
| (c) | Pb halide selected from Pb chloride and bromide | 0 to 60 mol % |
| (d) | Cd chloride | 0 to 70 mol % |
| | or Cd bromide | 0 to 50 mol % |
| (e) | Ag chloride | 0 to 40 mol % |
| | or Ag bromide | 0 to 50 mol % |
| (f) | Cu chloride | 0 to 50 mol % |
| | or Cu bromide | 0 to 60 mol % |
provided that when the material contains erbium chloride no bromides of other metals are present and when the material contains erbium bromide no chlorides of other metals are present, and provided also that the material contains no rare earth other than erbium.

2. An infrared-to-visible up-conversion material as claimed in claim 1 wherein the halogen is bromine and further comprising at least one element selected from yttrium (Y), and lead (Pb) or compounds of these elements exclusive of the oxides thereof.

3. An infrared-to-visible up-conversion material as claimed in claim 1 wherein the inorganic material comprises ErCl₃ and BaCl₂.

4. An infrared light identification element whenever comprising an infrared-to-visible up-conversion material as claimed in any one of the preceding claims.

## Patentansprüche

1. Infrarot-sichtbar-aufwärts-Umwandlungsmaterial, das Lumineszenz in einem Bereich von 520-550 nm und 650-670 nm während der Bestrahlung emittieren kann, bestehend aus einem anorganischen Material, bestehend im Wesentlichen aus:
| | | |
|---|---|---|
| (a) | Erbiumchlord | 0,5 bis 40 Mol-% |
| | oder Erbiumbromid | 0,5 bis 50 Mol-% |
| (b) | Erdalkalihalide, ausgewählt unter Erdalkalichloriden und -bromiden | 5 bis 80 Mol-% |
| (c) | Pb-Halid, ausgewählt unter Pb-Chlorid und -Bromid | 0 bis 60 Mol-% |
| (d) | Cd-Chlorid | 0 bis 70 Mol-% |
| | oder Cd-Bromid | 0 bis 50 Mol-% |
| (e) | Ag-Chlorid | 0 bis 40 Mol-% |
| | oder Ag-Bromid | 0 bis 50 Mol-% |
| (f) | Cu-Chlorid | 0 bis 50 Mol-% |
| | oder Cu-Bromid | 0 bis 60 Mol-% |
mit der Maßgabe, dass dann, wenn das Material Erbiumchlorid enthält, keine Bromide anderer Metalle vorhanden sind, und dass dann, wenn das Material Erbiumbromid enthält, keine Chloride anderer Metalle vorhanden sind, und außerdem mit der Maßgabe, dass das Material keine anderen seltenen Erden als Erbium enthält.

2. Infrarot-sichtbar-aufwärts-Umwandlungsmaterial gemäß Anspruch 1, worin das Halogen Brom ist und zusätzlich umfassend mindestens ein Element, ausgewählt unter Yttrium (Y) und Blei (Pb) oder Verbindungen dieser Elemente, ausgenommen die Oxide derselben.

3. Infrarot-sichtbar-aufwärts-Umwandlungsmaterial gemäß Anspruch 1, worin das anorganische Material ErCl₃ und BaCl₂ umfasst.

4. Infrarotlicht-Erkennungselement, wann immer es ein Infrarot-sichtbar-aufwärts-Umwandlungsmaterial gemäß einem der vorstehenden Ansprüche umfasst.

## Revendications

1. Matériau de conversion de l'infrarouge en lumière visible capable d'émettre une luminescence comprise dans une plage allant de 520 à 550 nm et de 650 à 670 nm pendant l'irradiation, comprenant un matériau inorganique essentiellement constitué :
| | | |
|---|---|---|
| (a) | de chlorure d'erbium | entre 0,5 et 40 % molaire |
| | ou de bromure d'erbium | entre 0,5 et 50 % molaire |
| (b) | d'un halogénure alcalino-terreux sélectionné parmi les chlorures et les bromures alcalino-terreux | entre 5 et 80 % molaire |
| (c) | d'un halogénure de Pb sélectionné parmi un chlorure ou un bromure de Pb | entre 0 et 60 % molaire |
| (d) | d'un chlorure de Cd | entre 0 et 70 % molaire |
| | ou d'un bromure de Cd | entre 0 et 50 % molaire |
| (e) | d'un chlorure d'Ag | entre 0 et 40 % molaire |
| | ou d'un bromure d'Ag | entre 0 et 50 % molaire |
| (f) | d'un chlorure de Cu | entre 0 et 50 % molaire |
| | ou d'un bromure de Cu | entre 0 et 60 % molaire |
à condition que, lorsque le matériau contient du chlorure d'erbium, aucun bromure d'autres métaux ne soit présent et que, lorsque le matériau contient du bromure d'erbium, aucun chlorure d'autres métaux ne soit présent, et à condition également que le matériau ne contienne aucune terre rare autre que l'erbium.

2. Matériau de conversion de l'infrarouge en lumière visible selon la revendication 1, dans lequel l'halogène est un bromure et comprenant, en outre, au moins un élément sélectionné parmi l'yttrium (Y) et le plomb (Pb) ou des composés de ces éléments à l'exclusion de leurs oxydes.

3. Matériau de conversion de l'infrarouge en lumière visible selon la revendication 1, dans lequel le matériau inorganique comprend du ErCl₃ et du BaCl₂.

4. Elément d'identification de la lumière infrarouge comprenant dans tous les cas un matériau de conversion de l'infrarouge en lumière visible selon l'une quelconque des revendications précédentes.
